# EUROPÄISCHE PATENTANMELDUNG

(11) **EP 1 031 511 A2**
(43) Veröffentlichungstag der Anmeldung: **30.08.2000**
(21) Anmeldenummer: 00101019.8
(22) Anmeldetag: 20.01.2000
(51) Int. Cl.: B64G 1/50

(54) **Radiatorstruktur eines Satelliten**

(30) Priorität: 26.02.1999 DE 19908683
(71) Anmelder: DORNIER GmbH, 88039 Friedrichshafen (DE)
(72) Erfinder: Kreeb, Helmut, Dr., 88709 Meersburg (DE); Schwarzott, Walter, 88048 Friedrichshafen (DE)
(74) Vertreter: Meel, Thomas

(57) **Zusammenfassung**

Die Erfindung betrifft eine Radiatorstruktur eines Satelliten, mit mehreren Radiatorpanels (P1-P6), wobei
eine erste Gruppe von Heatpipes (HP1) vorhanden ist, die entlang von Längskanten der Radiatorpanels (P1-P6) verlaufen;
eine zweite Gruppe von Heatpipes (HP2) vorhanden ist, die für die zweidimensionale Verteilung der Wärme über die Fläche eines Radiatorpanels (P1-P6) und ggf. für den Wärmetransport zwischen zwei an demselben Radiatorpanel befindlichen Heatpipes (HP1) der ersten Gruppe sorgen,
eine Heatpipe (HP2) der zweiten Gruppe an ihren Enden über eine bestimmte Strecke parallel zu einer Heatpipe (HP1) der ersten Gruppe geführt wird, und die beiden Heatpipes entlang dieser Strecke strukturell und thermisch miteinander verbunden sind,
benachbarte Radiatorpanels (P1-P6) entlang ihrer Längskanten im flächenhaften, wiederlösbaren Preßkontakt stehen.

## Beschreibung

Die Erfindung betrifft eine Radiatorstruktur eines Satelliten.

Der Wärmehaushalt eines Satelliten wird im wesentlichen durch das Zusammenspiel dreier Effekte bestimmt: äußere Einstrahlung, vorwiegend von der Sonne und der Erde, innere Wärmequellen, z.B. elektrische Geräte, und Wärmeabstrahlung in den Raum. Zur Regulierung des Wärmehaushalts werden auf der Außenseite des Satellitenkörpers üblicherweise mehrere Radiatorpanels angeordnet. Um die Temperaturen der einzelnen Panels und des ganzen Satelliten auszugleichen, ist eine thermische Verknüpfung der einzelnen Radiatorenpanels wünschenswert, ebenso wie eine gleichmäßige Temperatur über ein einzelnes Panel. Dies bedeutet Wärmetransport in den Panels (Isothermalisierung) und gleichzeitig Wärmetransport zwischen den Panels, wobei die einzelnen Panels in verschiedenen Winkeln zueinander stehen können.

In der **EP 0 776 827 A1** ist ein Satellit beschrieben, bei dem auf gegenüberliegenden Außenseiten des Satellitenkörpers jeweils ein Radiatorpanel angeordnet ist. In jedem Panel sind mehrere, parallel zueinander verlaufenden Heatpipes eingebettet. Zur thermischen Verknüpfung der beiden Radiatorpanels sind zusätzliche Heatpipes vorhanden, die von dem einem Panel ausgehend durch den Satellitenkörper hindurch zu dem anderen Panel verlaufen. Im Bereich der Panels sind diese zusätzlichen Heatpipes auf die Paneloberfläche aufmontiert und verlaufen im wesentlichen senkrecht zu den im Panel eingebetteten Heatpipes.

Nachteilig an dieser Ausführung ist, daß eine thermische Kopplung zwischen den im Panel eingebetteten Heatpipes und den auf der Paneloberfläche aufmontierten Heatpipes nur an den punktförmigen Kreuzungsstellen möglich ist. Aufgrund dieser geringen Kontaktfläche kann eine thermische Verknüpfung der beiden Radiatorpanels ebenso wie eine gleichmäßige Temperatur über dem einzelnen Panel nur sehr eingeschränkt erreicht werden.

Es ist deshalb Aufgabe der Erfindung, eine Radiatorstruktur zu schaffen, mit dem die beschriebenen Nachteile des Standes der Technik überwunden werden können.

Diese wird mit dem Gegenstand des Anspruch 1 gelöst. Vorteilhafte Ausgestaltungen der Erfindung sind Gegenstand weiterer Ansprüche.

Die erfindungsgemäße Radiatorstruktur umfaßt eine erste Gruppe von Heatpipes, die entlang der Längskanten der Radiatorpanels verlaufen. Benachbarte Radiatorpanels stehen entlang ihrer Längskanten im flächenhaften, wiederlösbaren Preßkontakt miteinander. Somit wird eine gute thermische Koppelung zwischen den Radiatorpanels erreicht. Für einen möglichst optimalen Wärmeübergang zu errreichen, sollte der Preßkontakt gleichmäßig über die gesamte Längskante sein. Dies kann zum Beispiel durch elastische Federkräfte oder durch hydraulische Kräfte mittels einer dehnbaren Membran erreicht werden. Aber auch eine Verschraubung ist möglich.
Für die zweidimensionale Verteilung der Wärme über die Fläche eines Radiatorpanels und gegebenenfalls für den Wärmetransport zwischen zwei an demselben Radiatorpanel befindlichen Heatpipes der ersten Gruppe sorgt eine zweite Gruppe von Heatpipes. Die Heatpipes dieser zweiten Gruppe werden an ihren Enden über eine bestimmte Strecke parallel zu einer Heatpipe der ersten Gruppe geführt, wobei die beiden Heatpipes entlang dieser Strecke strukturell und thermisch miteinander verbunden sind. Insbesondere ist ein Verschweißen der beiden Heatpipes möglich, so daß sich ein guter Wärmeübergang ergibt.

Durch diese Anordnung wird ein guter Wärmetransport in den einzelnen Panels und gleichzeitig zwischen den Panels erreicht. Somit kann die Temperatur über die gesamte Fläche der Radiatorstruktur ausgeglichen werden. Die erfindungsgemäße Struktur ist darüberhinaus einfach und problemlos zu integrieren.

Ein vorteilhafter Aspekt der Erfindung ist auch, daß die Heatpipes neben ihrer Wärmetransportfunktion gleichzeitig ein Element der mechanischen Tragestruktur eines Radiatorpanels bilden. Dazu werden die Heatpipes insbesondere in das Radiatorpanel integriert und nicht, wie z.B. in der EP 0 776 827 A1 auf die Oberfläche des Panels aufmontiert. So kann insbesondere die Längskante eines Panels von einer Heatpipe selbst gebildet werden.

Vorteilhafte Ausführungen der Erfindung werden anhand von Zeichnungen näher erläutert. Es zeigen:
Fig. 1 zwei erfindungsgemäße Radiatorstrukturen in Draufsicht;
Fig. 2 verschiedene Heatpipe-Querschnitte;
Fig. 3 ein Radiatorpanel im Querschnitt.

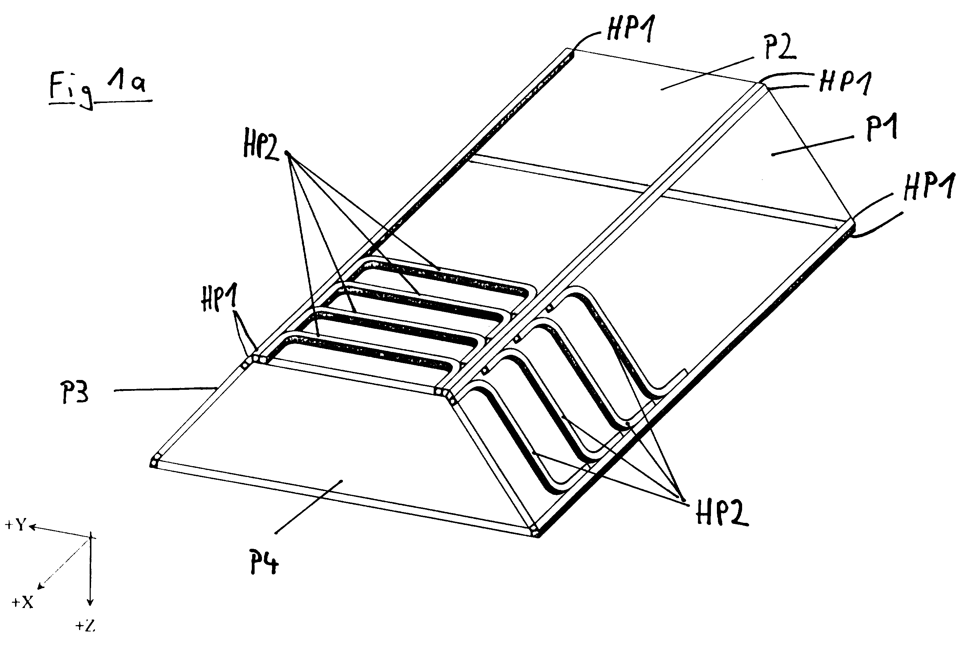

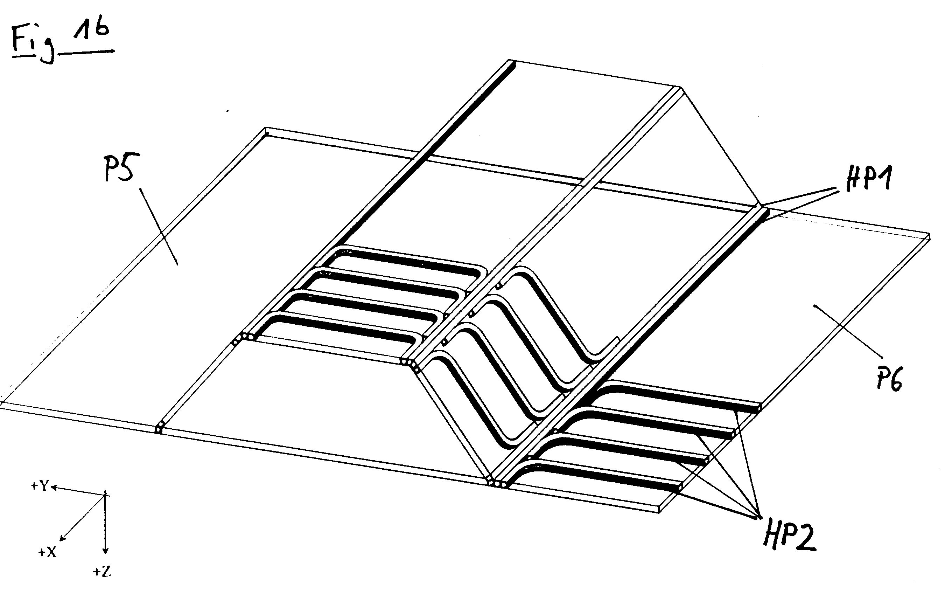

Fig. 1a zeigt eine beispielhafte Ausführung der erfindungsgemäßen Radiatorstruktur aus vier einzelnen Radiatorpanels P1,P2,P3,P4, die eine sargähnliche Gesamtstruktur bilden. Die vier Panels sind jeweils entlang ihrer Längsseiten wiederlösbar aneinandergepreßt, z.B. mittels einer Verschraubung. Entlang der Längskanten der einzelnen Panels verlaufen die Heatpipes HP1 der ersten Gruppe. Für die zweidimensionale Wärmeverteilung über die Fläche der einzelnen Panels sowie für den Wärmetransport zwischen den Heatpipes an verschiedenen Längskanten desselben Panels sorgen die Heatpipes HP2 der zweiten Gruppe, die im rechten Panel P1 z-förmig und im oberen Panel P2 u-förmig ausgebildet sind. Selbstverständlich ist es auch möglich, die Heatpipes der zweiten Gruppe auf allen Panels in der gleichen Form auszubilden. Die Heaptipes HP1 des ersten Gruppe und die Heatpipes HP2 der zweiten Gruppe sind über eine bestimmte Strecke parallel zueinander ausgerichtet. An diesen Bereichen sind die Heatpipes strukturell und thermisch miteinander verbunden.
In dieser schematischen Darstellung nicht zu erkennen ist, daß ämtliche Heatpipes in die Radiatorpanels eingebettet sind (also nicht auf die Paneloberfläche montiert sind) und somit ein mechanisches Gerippe bilden, daß wesentlich zur Stabilität der Panels beiträgt.

Fig. 1b zeigt eine weitere Ausführung der erfindungsgemäßen Radiatorstruktur. Sie entspricht weitgehend der in Fig. 1a gezeigten Ausführung, jedoch sind hier zwei zusätzliche Radiatorpanels P5,P6 vorhanden, die jeweils nur über eine Kante mit der übrigen Radiatorstruktur verbunden sind. Diese beiden Panels P5,P6 können - wie die übrigen Panels P1-P4 (Fig. 1a) - bereits am Boden fest montiert werden. Sie können aber auch so konstruiert sein, daß sie beim Start des Satelliten angeklappt sind, und erst im Orbit von der sargähnlichen Struktur abgeklappt werden. Auch bei diesen Panels P5,P6 verläuft eine Heatpipe HP1 entlang einer Längskante. Entlang dieser Kante stehen diese beiden Panels P5,P6 jeweils im Preßkontakt mit der zentralen sargähnlichen Struktur, so daß der thermisch Kopplung zu der zentralen Struktur hergestellt ist. Entlang der äußeren, der zentralen Struktur abgewandten Längskanten der beiden Panels P5,P6 ist die Verlegung einer Heatpipe nicht notwendig. Mittels Heatpipes HP2 der zweiten Gruppe erfolgt wie bei den zentralen Panels die Verteilung der Wärme über die Panelfläche.

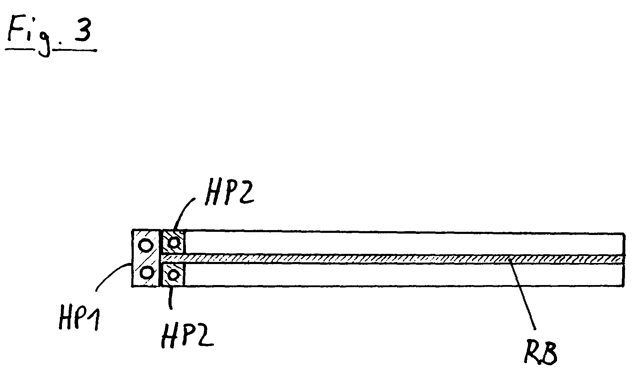

Heatpipes, wie sie in der Erfindung eingesetzt werden, sind dem Fachmann an sich bekannt. Sie weisen keine bewegten Teile auf und enthalten in einer oder mehreren aktiven Röhren eine bestimmte Menge eines Mediums, z.B. NH3. Abhängig davon, ob die Heatpipe einer Erwärmung oder einer Abkühlung ausgesetzt wird, ändert dieses Medium seinen Aggregatszustand von flüssig zu gasförmig oder umgekehrt. Die von den Heatpipes aufgenommene Wärme gelangt durch Wärmeleitung an die Deckbleche des Radiatorpanels und wird von dort in den Raum abgestrahlt. Fig. 3 zeigt beispielhaft einige Heatpipe-Querschnitte, wie sie in der erfindungsgemäßen Radiatorstruktur eingesetzt werden können. Die Heatpipes können insbesondere durch Strangpressen hergestellt werden.

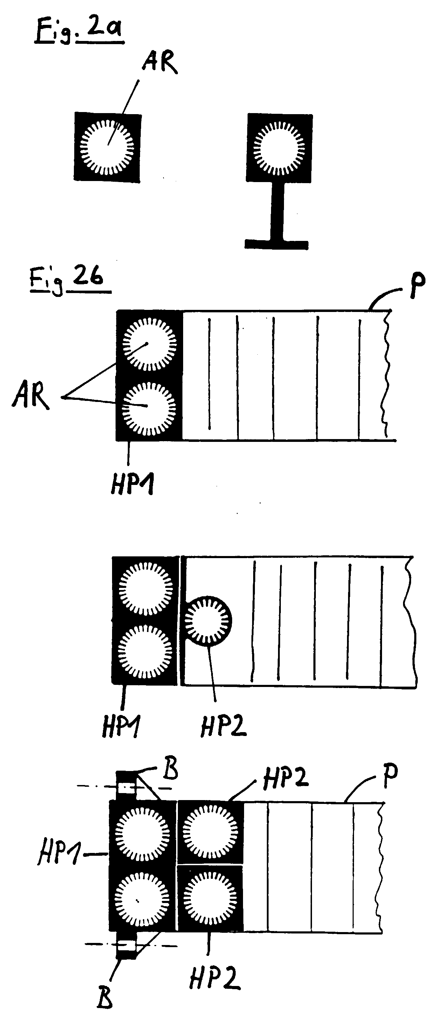

Die Heatpipe gemäß Fig. 2a, linke Abbildung, weist einen quadratischen Querschnitt auf und enthält eine aktive Röhre AR, innerhalb derer sich das Medium, z.B. NH3, befindet. Die Heatpipe gemäß Fig. 2a, rechte Abbildung, besitzt eine Erweiterung nach Art eines T-Profils.
Ein Querschnitt, der insbesondere für die Heatpipes HP1 der ersten Gruppe vorteilhaft eingesetzt werden kann, zeigt Fig. 2b, obere Abbildung. Er ist rechtwinklig ausgebildet und umfaßt zwei aktive Röhren AR. In der gezeigten Ausführung ist die Heatpipe erfindungsgemäß am Rand des Radiatorpanels P angeordnet. In Fig. 2b, mittlere Abbildung ist zusätzlich eine Heatpipe HP2 der zweiten Gruppe mit nur einer aktiven Röhre eingezeichnet, die mit der am Rand angeordneten Heatpipe HP1 der ersten Gruppe verschweißt ist. Um einen möglichst guten Kontakt zwischen den beiden Heatpipes herzustellen, weist diese Heatpipe HP2 zusätzlich ein plattenförmiges Bauteil auf, mit dem sie an der anderen Heatpipe HP1 anliegt (aus Gründen der Übersichtlichkeit sind die beiden Heatpipes mit einem kleinen Abstand voneinander eingezeichnet). In Fig. 2b, untere Abbildung ist eine Kombination einer Heatpipe HP1 der ersten Gruppe mit zwei Heatpipes HP2 der zweiten Gruppe dargestellt. Die den Rand des Radiatorpanels P bildende Heatpipe HP1 weist am unteren und oberen Rand jeweils eine nasenartige Erhebung B mit Löchern zur Durchführung von Schrauben auf. Damit kann eine Verschraubung des Panels P mit dem benachbarten Radiatorpanel (nicht eingezeichnet) realisiert werden. Die Schrauben können z.B. im Abstand von 5cm entlang der gesamten Längskante des Radiatorpanels angebracht werden.

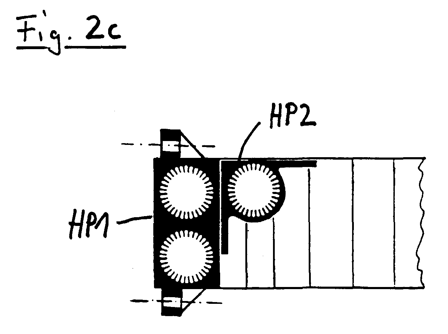

Fig. 2c zeigt ist eine weitere Kombination einer Heatpipe HP1 der ersten Gruppe mit einer Heatpipe HP2 der zweiten Gruppe, wie sie innerhalb eines Radiatorpanels eingebettet sind. In der gezeigten Ausführung ist die Heatpipe der zweiten Gruppe nach Art eines Winkel-Profils ausgebildet. Zwei plattenförmige Bauteile, benachbart zur aktiven Röhre der Heaptipe HP2, bilden einen rechten Winkel und sorgen für einen guten Kontakt zur danebenliegenden Heatpipe HP1 sowie zu einem Radiatorblech.
Die Ausführung nach Fig. 2d zeigt weitere vorteilhafte Heatpipe-Querschnitte. Die linke, T-Profil-artige Ausführung wurde bereits bei Fig. 2b beschrieben. In der Ausführung nach Fig. 2d, mittlere Abbildung, ist die aktive Röhre zwischen zwei parallelen plattenförmigen Bauteilen angeordnet und weist somit einen Querschnitt nach Art eines H-Profils auf. Die erwähnten, plattenförmigen Bauteile sorgen für einen guten Wärmekontakt zu dem benachbarten Bauteil (z.B. einem Radiatorblech, hier nicht eingezeichnet). In der rechten Abbildung der Fig. 2d sind oben und unten jeweils weitere plattenförmige Bauteile angeordnet, so daß sich benachbart zur aktiven Röhre parallel verlaufende Hohlräume ergeben.

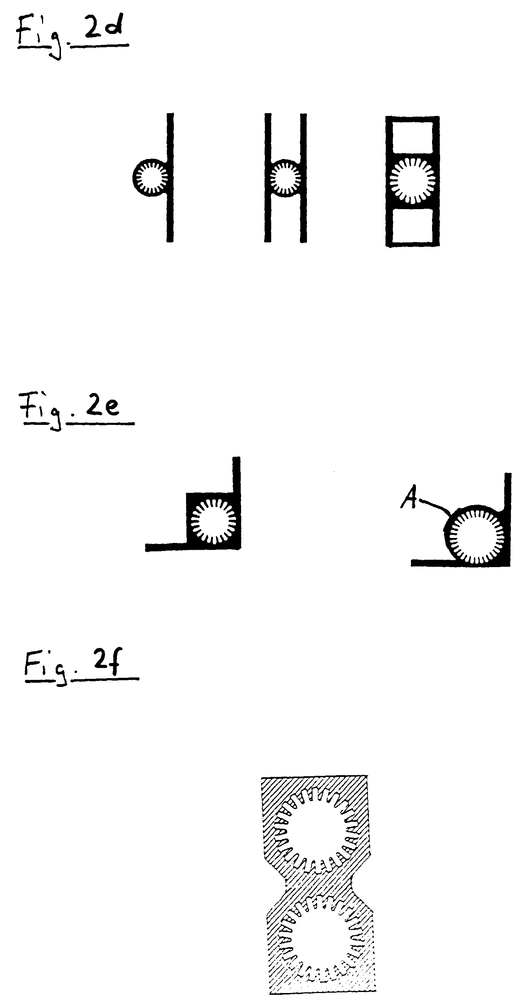

In Fig. 2e sind zwei Querschnitte nach Art eines Winkel-Profils dargestellt. Zwei plattenförmige Bauteile, an denen die aktive Röhre befestigt ist, bilden jeweils einen rechten Winkel und sorgen für einen guten Kontakt zu benachbarten Bauteilen, z.B. zu einer anderen Heatpipe und zu einem Radiatorblech. Dabei ist in der linken Abbildung die Einfassung der aktiven Röhre quadratisch ausgebildet, während sie in der rechten Abbildung im wesentlichen kreisförmig, mit einem ebenen Anschlußbereich A ausgebildet ist.
In Fig. 2f ist nochmals beispielhaft eine Heatpipe mit im wesentlichen rechteckigem Querschnitt und zwei aktiven Röhren dargestellt. Im Bereich zwischen den beiden aktiven Röhren sind links und rechts zwei Einkerbungen vorhanden. Die Höhe des Querschnitts beträgt in einer beispielhaften Ausführung ca. 70mm.

Fig. 3 zeigt ein Radiatorpanel im Querschnitt. Am linken Rand verläuft eine Heatpipe HP1 der ersten Gruppe mit zwei aktiven Röhren. Im strukturellen und thermischen Kontakt hierzu stehen zwei Heatpipes HP2 der zweiten Gruppe, zwischen denen ein Radiatorblech RB angeordnet ist. Das Radiatorblech RB bedeckt annähernd die gesamte Grundfläche des Radiatorpanels.

## Patentansprüche

1. Radiatorstruktur eines Satelliten, mit mehreren Radiatorpanels (P1-P6), wobei eine erste Gruppe von Heatpipes (HP1) vorhanden ist, die entlang von Längskanten der Radiatorpanels (P1-P6) verlaufen;
eine zweite Gruppe von Heatpipes (HP2) vorhanden ist, die für die zweidimensionale Verteilung der Wärme über die Fläche eines Radiatorpanels (P1-P6) und ggf. für den Wärmetransport zwischen zwei an demselben Radiatorpanel befindlichen Heatpipes (HP1) der ersten Gruppe sorgen,
eine Heatpipe (HP2) der zweiten Gruppe an ihren Enden über eine bestimmte Strecke parallel zu einer Heatpipe (HP1) der ersten Gruppe geführt wird, und die beiden Heatpipes entlang dieser Strecke strukturell und thermisch miteinander verbunden sind,
benachbarte Radiatorpanels (P1-P6) entlang ihrer Längskanten im flächenhaften, wiederlösbaren Preßkontakt stehen.

2. Radiatorstruktur nach Anspruch 1, dadurch gekennzeichnet, daß der Preßkontakt mittels elastischer Federkräfte oder mittlels hydraulischer Kräfte oder mittels einer Verschraubung realisiert ist.

3. Radiatorstruktur nach Anspruch 1 oder 2, dadurch gekennzeichnet, daß die Heatpipes ein Element der mechanischen Tragestruktur eines Panels (P1-P6) bilden.

4. Radiatorstruktur nach einem der vorangehenden Ansprüche, dadurch gekennzeichnet, daß die Heatpipes (HP2) der zweiten Gruppe u-förmig, s-förmig oder z-förmig ausgebildet sind.

5. Radiatorstruktur nach einem der vorangehenden Ansprüche, dadurch gekennzeichnet, daß die Heatpipes einen quadratischen Querschnitt aufweisen oder einen Querschnitt nach Art eines T-Profils oder H-Profils oder eines Winkel-Profils aufweisen.

6. Radiatorstruktur nach einem der vorangehenden Ansprüche, dadurch gekennzeichnet, daß die Heatpipes eine oder mehrere aktive Röhren (AR) enthalten.

7. Radiatorstruktur nach einem der vorangehenden Ansprüche, dadurch gekennzeichnet, daß die Heatpipes innerhalb einer Wabenstruktur angeordnet sind.

8. Radiatorstruktur nach einem der vorangehenden Ansprüche, dadurch gekennzeichnet, daß die Heatpipes mit Blechen (RB) verkleidet sind.

9. Radiatorstruktur nach einem der vorangehenden Ansprüche, dadurch gekennzeichnet, daß die Heatpipes mittels Strangpressen hergestellt sind.

10. Radiatorstruktur nach Anspruch 9, dadurch gekennzeichnet, daß an dem Strangpreßprofil eine zusätzliche Nase (B) für die Realisierung des Preßkontakts mittels Verschraubung vorhanden ist.
